# EUROPEAN PATENT APPLICATION

(11) **EP 4 765 417 A1**
(43) Date of publication of application: **24.06.2026**
(21) Application number: 25211267.7
(22) Date of filing: 27.10.2025
(51) Int. Cl.: H01M 50/342

(54) **SECONDARY BATTERY**

(30) Priority: 18.12.2024 KR 20240190606
(71) Applicant: SAMSUNG SDI CO., LTD., Yongin-si, Gyeonggi-do 17084 (KR)
(72) Inventor: Lee, Hyunsoo, 17084 Yongin-si, Gyeonggi-do (KR)
(74) Representative: Meissner Bolte Partnerschaft mbB

(57) **Abstract**

A secondary battery, including an electrode assembly, a case accommodating the electrode assembly, and a cap plate covering an open portion of the case, wherein one of the case and the cap plate includes a vent part on an outer surface thereof, the vent part including a notch, the notch includes a first notch and a second notch, the first notch extends from a central portion of the vent part in a first direction, the second notch includes a first area extending from the central portion in the first direction, and a second area extending from the first area in a direction different from the first direction, and the first notch is inside the first area.

## Description

### BACKGROUND

### 1. Field

The present invention relates to a secondary battery.

### 2. Description of the Related Art

A secondary battery is designed to be charged and discharged, unlike a primary battery which is not designed to be charged. Low-capacity secondary batteries are used in portable small-sized electronic devices, such as smartphones, feature phones, laptop computers, digital cameras, and camcorders, while high-capacity secondary batteries are widely used as energy sources for driving motors in hybrid vehicles, electric vehicles, and the like, and a battery for power storage. Such a secondary battery includes an electrode assembly having a positive electrode and a negative electrode, a case housing the electrode assembly, electrode terminals connected to the electrode assembly, and the like.

The above-described information disclosed in the background technology of this invention is only intended to improve understanding of the background of the invention and therefore may include information that does not constitute the prior art.

### SUMMARY OF THE INVENTION

The invention concerns a secondary battery, including an electrode assembly, a case accommodating the electrode assembly, and a cap plate covering an open portion of the case, wherein one of the case and the cap plate includes a vent part on an outer surface thereof, the vent part including a notch, the notch includes a first notch and a second notch, the first notch extends from a central portion of the vent part in a first direction, the second notch includes a first area extending from the central portion in the first direction, and a second area extending from the first area in a direction different from the first direction, and the first notch is inside the first area.

The second notch may be less deep than the first notch.

A difference in depth between the first notch and the second notch may be 20% or less of a thickness of the case.

A length of the first notch may be 1/3 or less of a length of the first area.

A depth of the first notch may be 70% to 85% of a thickness of the case.

A depth of the second notch may be 50% to 70% of a thickness of the case.

The notch may further include a groove in the central portion, and a width of the groove may extend in the first area.

The notch may further include a third notch surrounding the second notch, ends of the second area may be connected, and the third notch may be less deep than the second notch.

The depth of the third notch may be 20% to 50% of a thickness of the case.

A width of the third notch may be greater than a width of the first notch, and a width of the second notch may be greater than the width of the third notch.

Another aspect of the invention relates to a secondary battery, including an electrode assembly, a case accommodating the electrode assembly, and a cap plate covering an open portion of the case, wherein one of the case and the cap plate includes a vent part on an outer surface thereof, the vent part including a notch, the notch includes a first notch, a second notch, and a third notch, the first notch extends from a central portion of the vent part in a first direction, the second notch includes a first area extending from the central portion in the first direction, and a second area extending from the first area in a direction different from the first direction, the third notch surrounds the second notch, and ends of the second area are connected.

The first notch may be inside the first area.

A difference in depth between the first notch and the second notch may be 20% or less of a thickness of the case.

A length of the first notch may be 1/3 or less of a length of the first area.

A depth of the first notch may be 70% to 85% of a thickness of the case.

A depth of the second notch may be 50% to 70% of a thickness of the case.

A depth of the third notch may be 20% to 50% of a thickness of the case.

A width of the third notch may be greater than a width of the first notch, and a width of the second notch may be greater than the width of the third notch.

The notch may further include a groove in the central portion, and a width of the groove may extend in the first area.

The second notch may be less deep than the first notch, and the third notch may be less deep than the second notch.

### BRIEF DESCRIPTION OF THE DRAWINGS

Features will become apparent to those of ordinary skill in the art by describing in detail exemplary embodiments with reference to the attached drawings, in which:
FIG. 1 is a schematic perspective view of an example of a secondary battery according to an embodiment of the invention;
FIG. 2 is a schematic cross-sectional view of an example of a cross-section taken along line III-III' of FIG. 1;
FIG. 3 is a schematic plan view of an example of a vent part of a secondary battery according to an embodiment of the invention;
FIG. 4 is a schematic plan view of an example of a vent part of a secondary battery according to another embodiment of the invention;
FIG. 5 is an enlarged perspective view of an example of a vent part of a secondary battery according to another embodiment of the invention;
FIGS. 6A to 6C are a sequential view of an operation of a vent part of a secondary battery according to an embodiment of the invention; and
FIGS. 7A to 7C are views of modified examples of notches formed on a vent part of a secondary battery according to an embodiment of the invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Terms or words used in this specification and claims should not be interpreted as limited to their usual or dictionary meanings, and should be interpreted as meanings and concepts that conform to the technical idea of the invention based on the principle that the inventor may appropriately define the concept of the term in order to explain his or her own invention in the best way. Therefore, the embodiments described in this specification and the configurations illustrated in the drawings are only some of the most preferred embodiments of the invention and do not represent all of the technical ideas of the invention, and it should be understood that there may be various equivalents and modified examples that may replace those embodiments at the time of filing this application.

The terms "comprise" or "include" and/or "comprising" or "including" as used herein specify the presence of stated features, numbers, steps, operations, members, elements, and/or groups thereof, but do not preclude the presence or addition of one or more other features, numbers, operations, members, elements, and/or groups thereof.

Although the terms first, second, and the like may be used herein to describe various components, these components are not limited by these terms. These terms are used only to distinguish one component from another, and unless otherwise stated, it is of course the case that a first component may also be a second component.

Throughout the specification, unless otherwise stated, each component may be singular or plural.

Any configuration being placed "above (or below)" a component or "on (or under)" a component may mean not only that any configuration is placed in contact with the upper surface (or lower surface) of a component, but also that other configurations may be interposed between the component and any configuration placed on (or below) the component.

Further, when one component is described as being "connected," "coupled," or "fastened" to another component, the components may be directly connected or able to be connected to each other; however, it is also to be understood that an additional component may be "interposed" between the two components, or the two components may be "connected," "coupled," or "fastened" through the additional component. In case that it is said that a part is electrically coupled to another part, this includes not only cases where they are directly connected, but also cases where they are connected with another element in between.

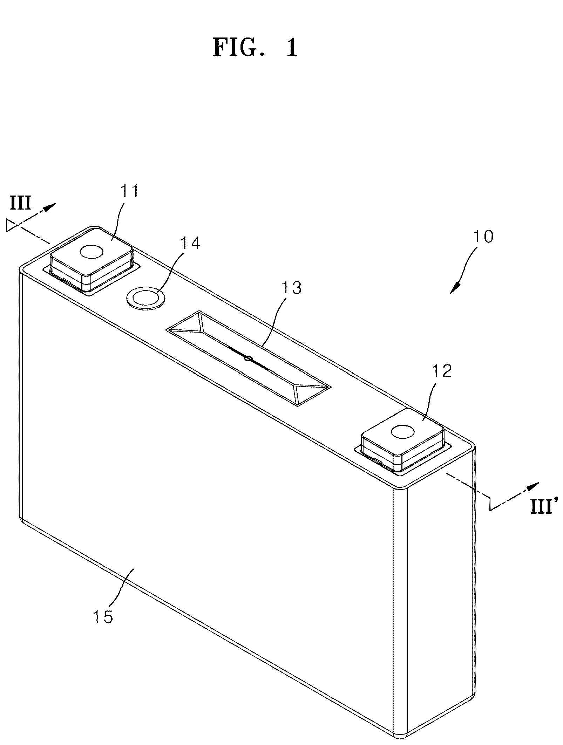

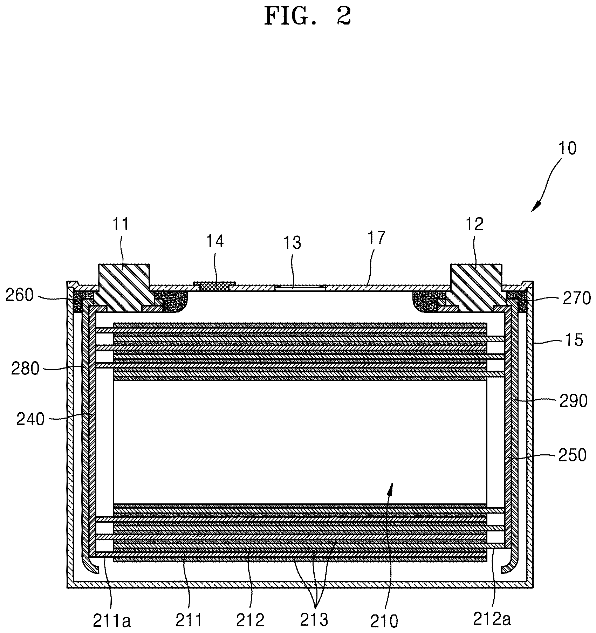

FIG. 1 is a schematic perspective view of an example of a secondary battery according to an embodiment of the invention, and FIG. 2 is a schematic cross-sectional view of an example of a cross-section taken along line III-III' of FIG. 1.

Referring to FIGS. 1 and 2, a secondary battery 10 according to an embodiment of the invention includes an electrode assembly 210, terminal part 11 and terminal part 12, each electrically connected to the electrode assembly 210, a case 15 accommodating the electrode assembly 210, and a cap plate 17 covering an upper (e.g., open) portion of the case 15.

A description will be given of an example in which the secondary battery 10 according to an embodiment of the invention is a lithium ion battery cell having a square (e.g., rectangular) shape. However, the invention may be applied to various types of battery cells, such as lithium polymer battery cells or cylindrical battery cells.

The terminal part 11 and the terminal part 12 may include a first terminal 11 and a second terminal 12 having different polarities. For example, in case that the first terminal 11 is a positive electrode terminal, the second terminal 12 may be a negative electrode terminal, and in another example, in case that the first terminal 11 is a negative electrode terminal, the second terminal 12 may be a positive electrode terminal. For example, the first terminal 11 and the second terminal 12 may be formed to have electrically different polarities, and may not have specific polarities.

The secondary battery 10 may include at least one of the electrode assembly 210 wound with a separator 213, which is an insulator, interposed between a positive electrode 211 and a negative electrode 212, and a case 15 in which the electrode assembly 210 is built (e.g., is accommodated). The electrode assembly 210 and an electrolyte may react electrochemically to generate energy.

The positive electrode 211 and the negative electrode 212 may be wound after placing the separator 213 as the insulator between the positive electrode 211 and the negative electrode 212. However, the electrode assembly 210 described above may be formed in a structure in which the positive electrode 211 and the negative electrode 212 each including a plurality of sheets are alternately stacked with the separator 213 placed between the positive electrode 211 and the negative electrode 212.

The positive electrode 211 and the negative electrode 212 may include coated parts and uncoated parts 211a and 212a, respectively, in a current collector formed of a thin plate metal foil. The coated parts may be coated with an active material and the uncoated parts 211a and 212a may not be coated with the active material.

The case 15 may form the overall appearance of the secondary battery 10 and may provide a space in which the electrode assembly 210 is accommodated. The case 15 may include a conductive metal, such as aluminum, an aluminum alloy, or nickel-plated steel.

The secondary battery 10 may include the cap plate 17 that covers an opening of the case 15. The case 15 and the cap plate 17 may include a conductive material. Here, the first terminal 11 and the second terminal 12 electrically connected to the positive electrode 211 or the negative electrode 212 may be installed to protrude outward through the cap plate 17.

For example, outer circumferential surfaces of upper pillars of the first terminal 11 and the second terminal 12, which protrude to the outside of the cap plate 17, may be threaded and fixed to the cap plate 17 by using nuts. However, the first terminal 11 and the second terminal 12 may be formed in a rivet structure to be riveted or may be welded to the cap plate 17.

The cap plate 17 may be a thin plate and may be coupled to the opening of the case 15. An electrolyte injection opening 14 in which a sealing cap may be installed may be formed in the cap plate 17.

The first terminal 11 and the second terminal 12 may be electrically connected to a current collector, which includes a first current collector 240 and a second current collector 250 (hereinafter, referred to as positive and negative electrode current collectors) welded to an uncoated part 211a of the positive electrode terminal or an uncoated part 212a of the negative electrode terminal.

For example, the first terminal 11 and the second terminal 12 may be coupled to the positive electrode current collector 240 and the negative electrode current collector 250, respectively, in a welding manner. However, the first terminal 11 and the second terminal 12 may be integrally coupled with the positive electrode current collector 240 and negative electrode current collector 250, respectively.

In some embodiments, an insulating member may be installed between the electrode assembly 210 and the cap plate 17. Here, the insulating member may include a first lower insulating member 260 and a second lower insulating member 270. The first lower insulating member 260 and the second lower insulating member 270 may each be installed between the electrode assembly 210 and the cap plate 17.

According to an embodiment, separation members may be installed between insulating members and the first terminal 11 and the second terminal 12, in a manner that one end of each separation member is arranged opposite to a corresponding side surface of the electrode assembly 210, and the separation members may include a first separation member 280 and a second separation member 290. Accordingly, one end of the first separation member 280 and one end of the second separation member 290, which are disposed opposite to the corresponding side surfaces of the electrode assembly 210, respectively, may be arranged between the first lower insulating member 260 and the first terminal 11 and between the second lower insulating member 270 and the second terminal 12, respectively.

This may allow the first terminal 11 and the second terminal 12, which are welded to the positive electrode current collector 240 and negative electrode current collector 250, respectively, to be coupled with the first lower insulating member 260 and the second lower insulating member 270 and the corresponding ends of the first separation member 280 and the second separation member 290.

In some embodiments, the secondary battery 10 according to an embodiment of the invention includes a vent part 13. In case that the secondary battery 10 is charged or discharged, an active material and an electrolyte may deteriorate or decompose due to an abnormal external environment, thereby generating gas. The gas generated may increase internal pressure of the secondary battery 10, causing further rapid deterioration.

The vent part 13 may be an area where internal gas is discharged to the outside of the secondary battery 10, and may improve the safety of the secondary battery 10 against heat transfer and fire.

The vent part 13 may be positioned on the case 15 that accommodates the electrode assembly 210 or on the cap plate 17 that covers the upper portion of the case 15. For example, the vent part 13 may be located between the first terminal 11 and the second terminal 12 of the terminal part on the cap plate 17. As another example, the vent part 13 may be located on a lower surface, each of opposite side surfaces, or one side surface. The shape of the vent part 13, including size and position of the vent part 13, may be other than that shown in FIGS. 1 and 2.

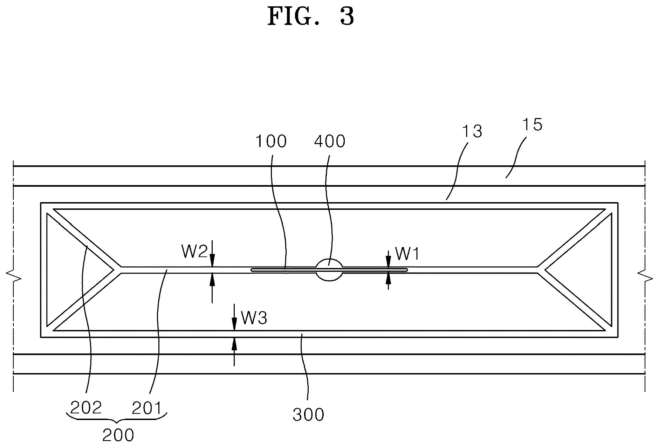

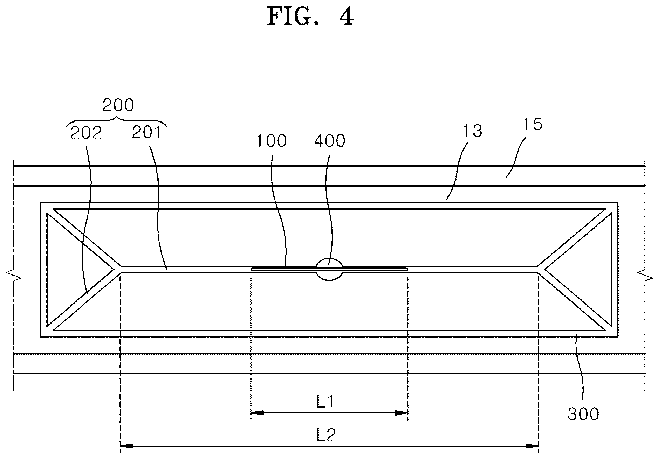

FIG. 3 is a schematic plan view of an example of a vent part of a secondary battery according to an embodiment of the invention, and FIG. 4 is a schematic plan view of an example of a vent part of a secondary battery according to another embodiment of the invention.

Referring to FIGS. 3 and 4, a secondary battery according to an embodiment of the invention includes a vent part 13. In case that the secondary battery fires (e.g., starts a fire and/or gas) due to repeated charging and discharging, gas generated inside the secondary battery may be discharged to the outside through the vent part 13. The vent part 13 may suppress fire propagation and thermal runaway by discharging gas and heat, thereby improving the safety of the secondary battery.

The vent part 13 may include a notch formed to have a certain depth from an outer surface of the case 15 or the cap plate. An area of the vent part 13 where the notch is formed may be thinner than other areas of the case 15 or the cap plate, and the vent part 13 formed thinner than the other areas may be preferentially ruptured in case that the internal pressure of the secondary battery increases.

In case that the secondary battery experiences thermal runaway, high-temperature and high-pressure gas may be generated, which may increase the internal pressure of the secondary battery, causing the case 15 to be torn or the secondary battery to burst. The secondary battery according to an embodiment may include the vent part 13 having the notch formed therein, and thus may discharge internal gas and heat to the outside by operating the vent part 13 and reduce the risk of thermal runaway, which is a series of explosions.

In some embodiments, the notch may include a first notch 100 and a second notch 200.

The first notch 100 may extend in a first direction from a central portion of the vent part 13. For example, the first direction may be the same as a longitudinal direction of the vent part 13, and the first notch 100 may be formed parallel to the longitudinal direction of the vent part 13.

A thickness of the vent part 13 in an area where the first notch 100 is formed may be thinner than that in other areas, and therefore, the vent part 13 may be easily ruptured along the first notch 100 in case that the internal pressure increases. A space may be formed due to the rupture of the first notch 100, and gas and heat may be smoothly discharged from the inside of the secondary battery through the formed space, thereby improving the safety of the secondary battery.

For example, the first notch 100 may be formed in an area exhibiting the greatest strain from the increase in the internal pressure of the secondary battery. The secondary battery 10 including the case 15 may expand due to gas and heat generated internally. In this instance, the first notch 100 may be located in the area where the greatest strain from the expansion is shown, allowing stress from the internal pressure to concentrate in the area where the first notch 100 is formed. For example, the first notch 100 may be formed in an area subjected to maximum tensile stress, and tensile failure may occur.

By forming the first notch 100 in the area where the greatest strain is shown, the operation of the vent part 13 may be quickly carried out, and the burst or thermal runaway phenomenon of the secondary battery may be delayed or suppressed.

The second notch 200 may include a first area 201 extending in a first direction from the central portion of the vent part 13, and a second area 202 extending in a direction different from the first direction from the first area 201. For example, the first direction may be the same as the longitudinal direction of the vent part 13, and the first area 201 of the second notch 200 may be parallel to the first notch 100 in the longitudinal direction of the vent part 13.

In this instance, the first notch 100 may be located inside the first area 201. The area where the first notch 100 is formed may overlap the first area 201 of the second notch 200, and may be defined such that the first notch 100 is positioned inside the second notch 200 (e.g., inside the first area 201).

For example, the first notch 100 may be formed to have a certain depth from a lower surface of the second notch 200 toward an inner surface. For example, after the first area 201 of the second notch 200 is formed, the first notch 100 may be formed in a portion of the first area 201 through an additional forging process.

As the first notch 100 is positioned inside the first area 201 to overlap the second notch 200, the thickness of the vent part 13 in the area where the first notch 100 and the second notch 200 are formed may be thinner than that in other areas. Accordingly, the vent part 13 which includes the first notch 100 and the second notch 200 may be ruptured by less force to secure a gas flow path and suppress further deterioration, thereby enhancing the safety of the secondary battery.

By forming the first notch 100 in the first area 201 and allowing the rupture and opening of the vent part 13 to occur from the first notch 100, the rupture of the vent part 13 may take place in the first area 201 before the rupture occurs in the second area 202, and rupture conditions may be controlled by facilitating a sequential rupture of the vent part 13.

A length L1 of the first notch 100 may be 1/3 or less of a length L2 of the first area 201. The first notch 100 may be formed in the first area 201 to be located in the second notch 200. The longer the length L1 of the first notch 100, the faster the vent part 13 may be operated (e.g., ruptured), and gas and heat may be discharged smoothly through a space formed due to the rupture of the first notch 100, thereby reducing the risk of thermal runaway diffusion.

However, in case that the length L1 of the first notch 100 exceeds 1/3 of the length L2 of the first area 201, there may be problems, such as the vent part 13 being ruptured even by a pressure lower than an internal pressure, which is set for the vent part 13 to be ruptured, external foreign substances penetrating through the vent part 13, and the like.

Accordingly, the secondary battery according to an embodiment may be configured such that the length L1 of the first notch 100 is 1/3 or less of the length L2 of the first area 201, thereby ensuring the durability of the secondary battery while also ensuring the safety and reliability of the secondary battery by controlling the pressure conditions that lead to the rupture of the vent part 13.

In some embodiments, the second area 202 of the second notch 200 may extend from the first area 201 in a direction different from the first direction. The second area 202 may extend from each of one end and another end of the first area 201. The second area 202 may extend to a plurality of the second area 202 from each of the one end and the other end of the first area 201.

For example, the plurality of the second area 202 extending from the one end of the first area 201 may extend in a second direction and a third direction different from the first direction, and the plurality of the second area 202 extending from the other end of the first area 201 may extend in a fourth direction and a fifth direction different from the first direction. The second to fifth directions may be the same or different directions, and the plurality of the second area 202 may be positioned symmetrically or asymmetrically with respect to a central portion.

The second area 202 may be ruptured after the sequential rupture of the first notch 100 and the first area 201. The second area 202 may expand a rupture area so that high-temperature and high-pressure gas generated inside the secondary battery may be smoothly discharged, and may extend in the different direction from the direction in which the first area 201 extends to thusly be ruptured by less force. Therefore, the vent part 13 may operate quickly to suppress the burst of the secondary battery.

For example, the second area 202 may extend from one end of the first area 201 to a plurality of the second area 202, and as a specific example, may extend in a V shape from the one end of the first area 201. As a rupture area and an open space increases along the second area 202, gas and heat may be quickly discharged from the inside of the secondary battery, reducing the risk of thermal runaway.

The notch may further include a third notch 300 surrounding the second notch 200 by connecting ends of the plurality of the second area 202. The third notch 300 may be formed to surround the second notch 200 to suppress any areas other than the vent part 13 from being ruptured or the vent part 13 from being separated. The third notch 300 may stably maintain the vent part 13 while gas and heat are discharged through a space which is formed due to the rupture of the first notch 100 and the second notch 200.

The third notch 300 may be formed along a boundary of the vent part 13, and the size of the vent part 13 which is ruptured or opened may be determined according to the internal pressure of the secondary battery. The size of the vent part 13 determined along the boundary of the vent part 13 may vary depending on, for example, a battery material, a generated flow rate, a battery shape, and the like.

In some embodiments, a width W3 of the third notch 300 may be greater than a width W1 of the first notch 100, and a width W2 of the second notch 200 may be greater than the width W3 of the third notch 300. The width of the notch may provide a space in which the vent part 13 is to be opened for discharge of gas and heat. In case that the width of each notch is narrower than a certain width, it may be difficult to secure the space necessary for opening the vent part 13. In another example, in case that the width of each notch is greater than the certain width, it may be difficult to protect the secondary battery and maintain strength and durability of the case 15.

The first notch 100 may be located in the first area 201, and the width W1 of the first notch 100 may be narrower than the width W2 of the second notch 200. This may allow the first notch 100 to be formed inside the second notch 200. For example, an additional forging process may be performed on a portion of the first area 201 to form the first notch 100, which is narrow and deep, inside the second notch 200. The first notch 100 may increase a depth of a portion of the area where the second notch 200 is formed and may quickly operate the vent part 13, resulting in improving the safety of the secondary battery. The first notch 100 may lead to the sequential rupture and control rupture conditions by allowing the first area 201 to be ruptured earlier than the second area 202.

The width W2 of the second notch 200 may be greater than the width W1 of the first notch 100 and the width W3 of the third notch 300. The wide width of the second notch 200 may facilitate the rupture and opening of the vent part 13. The second notch 200 may be ruptured following the rupture of the first notch 100 and may increase the rupture area and open space of the vent part 13. The open space of the vent part 13 extending along the second notch 200 may serve as a path for gas discharge and heat exposure, thereby suppressing heat propagation and fire.

The width W3 of the third notch 300 may be narrower than the width W2 of the second notch 200. The third notch 300 may be formed along the boundary of the vent part 13 to suppress rupture in areas outside the vent part 13, thereby determining the size of the vent part 13. The width W3 of the third notch 300 may be set so that the vent part 13 may keep operating stably without being separated while gas and heat are discharged.

In some embodiments, the notch may further include a groove 400 which is formed in a central portion of the vent part 13 by increasing the width of the first area 201. The groove 400 may be formed in a shape in which the second notch 200 extends from the central portion, and for example, may have a circular shape centered on the central portion of the vent part 13.

In this instance, the groove 400 may be formed in an area where stress from the internal pressure of the secondary battery is concentrated. For example, secondary batteries may expand due to gas and heat, and areas where stress is concentrated may exhibit the greatest strain from the expansion. The groove 400 may be formed in an area subjected to maximum tensile stress, and tensile failure may occur.

In case that the internal pressure of the secondary battery increases, the groove 400 formed in the central portion of the vent part 13 may be a portion which is first ruptured due to high-temperature and high-pressure gas, and the vent part 13 may start to be open from the groove 400. The secondary battery according to this embodiment may control the operation of the vent part 13 by concentrating stress in the groove 400 formed in the notch, thereby securing the safety and reliability.

According to an embodiment, the groove 400 may be formed in the central portion of the vent part 13 in a shape that a width of the first area 201 increases, and the first notch 100 may be positioned in the first area 201 and may extend from the central portion (e.g., on both sides of the groove 400). Accordingly, the first notch 100 may be positioned to pass through the groove 400 formed in the central portion of the vent part 13, and an area where the first notch 100 and the groove 400 overlap each other may be an area where the greatest strain from the expansion of the secondary battery is shown. In case that the secondary battery fires (e.g., starts a fire and/or gas), the groove 400 and the first notch 100 may quickly operate the vent part 13 and suppress the strain or burst of the secondary battery.

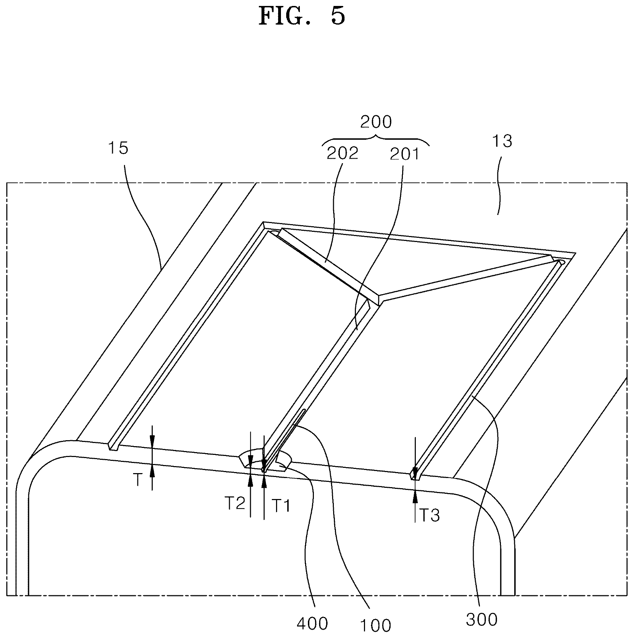

FIG. 5 is an enlarged perspective view of an example of a vent part of a secondary battery according to another embodiment.

Referring to FIG. 5, the secondary battery according to an embodiment of the invention includes the vent part 13 in which the notch is formed. The first notch 100, the second notch 200, and the third notch 300 may have different depths, and thus the vent part 13 may have a different thickness in each area where a notch is formed. In this instance, a thickness of the vent part 13 in the area where the notch is formed may be a thickness from the lowest point of the notch to the inner surface of the case 15, and a thickness of the vent part 13 in an area where the notch is not formed may be the same as a thickness T of the case 15.

The area of the vent part 13 in which the notch is formed may have a thickness which is thinner than that in other areas. In case that the vent part 13 is thin due to the deep notch, the vent part 13 may be first ruptured and opened due to gas and heat upon the increase in the internal pressure of the secondary battery.

In this embodiment, for convenience of explanation, the thickness of the vent part 13 in the area where the first notch 100 is formed may be referred to as a first thickness T1, the thickness of the vent part 13 in the area where the second notch 200 is formed may be referred to as a second thickness T2, and the thickness of the vent part 13 in the area where the third notch 300 is formed may be referred to as a third thickness T3.

A depth T-T1 (e.g., T minus T1) of the first notch 100 may be 70% to 85% of the thickness T of the case 15. For example, the first thickness T1 may be 15% to 30% of the thickness T of the case 15. In case that the first thickness T1 is less than 15% of the thickness T of the case 15, the thickness of the vent part 13 may be too thin. This may cause the vent part 13 to be potentially ruptured even by low internal pressure. In another example, in case that the first thickness T1 exceeds 30% of the thickness T of the case 15, the rapid operation of the vent part 13 may not be allowed. This may restrict gas and heat from being discharged at an appropriate time.

A depth T-T2 of the second notch 200 may be 50% to 70% of the thickness T of the case 15. For example, the second thickness T2 may be 30% to 50% of the thickness T of the case 15. In case that the second thickness T2 is less than 30% of the thickness T of the case 15, the vent part 13 may be ruptured even by a pressure lower than an internal pressure which is set to cause the vent part 13 to be ruptured. In another example, in case that the second thickness T2 exceeds 50% of the thickness T of the case 15, it may be difficult to expand the rupture area and open the space of the vent part 13.

A depth T-T3 of the third notch 300 may be 20% to 50% of the thickness T of the case 15. For example, the third thickness T3 may be 50% to 80% of the thickness T of the case 15. In case that the third thickness T3 is less than 50% of the thickness T of the case 15, a problem may occur in which any areas other than the vent part 13 may be ruptured due to discharged gas or the case 15 may be torn and the vent part 13 may be separated. In another example, in case that the third thickness T3 exceeds 80% of the thickness T of the case 15, it may be difficult to provide a space in which the vent part 13 is to be opened for discharge of gas and heat.

In this instance, a difference in depth between the first notch 100 and the second notch 200 may be 20% or less of the thickness T of the case 15. For example, a difference between the first thickness T1 and the second thickness T2 may be 20% or less of the thickness T of the case 15. In case that the difference between the first thickness T1 and the second thickness T2 exceeds 20% of the thickness T of the case 15, it may be difficult to design a notch that satisfies the sequential rupture and desired rupture pressure of the first notch 100 and the second notch 200, and there may be a problem with the durability of the secondary battery.

The secondary battery according to this embodiment may include the vent part 13 having the notches with different depths, so that the operation of the vent part 13 may be controlled by controlling the pressure conditions at which the vent part 13 is ruptured. The difference in notch depth may lead to the sequential rupture and allow the stable discharge of gas and heat, thereby improving the safety of the secondary battery.

The secondary battery according to this embodiment may simplify a process compared to installing a configuration including a separate vent. For example, the notch may be formed through a forging process, and as a specific example, the case 15 may be molded and manufactured through first forging to form the third notch 300, second forging to form the second notch 200, and third forging to form the first notch 100. The secondary battery according to this embodiment may reduce manufacturing costs by designing and manufacturing the vent part 13 integrally in the case 15, and may control the rupture conditions while maintaining high strength and durability of the secondary battery including the case 15.

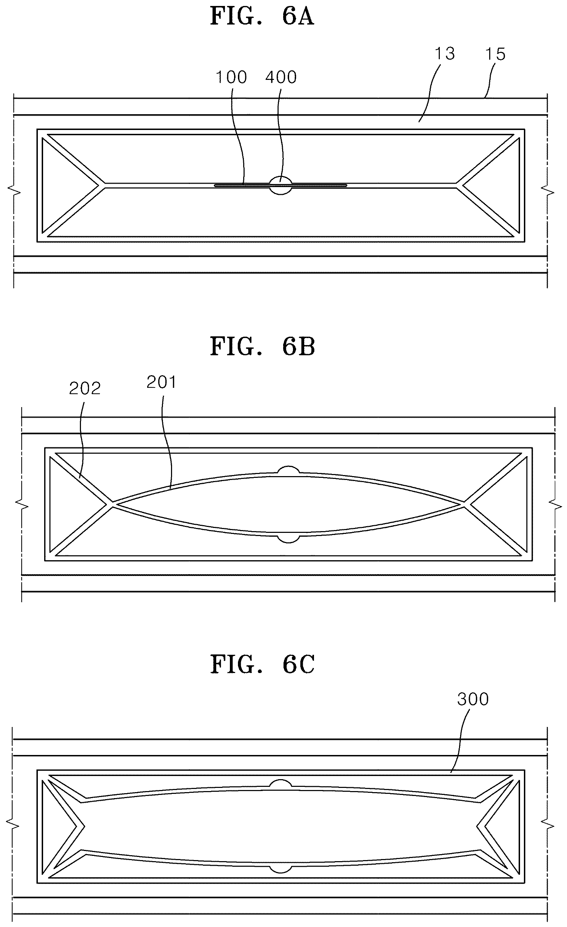

FIGS. 6A to 6C is a sequential view of an operation of a vent part of a secondary battery according to an embodiment of the invention.

Referring to FIGS. 6A to 6C, a secondary battery according to an embodiment of the invention includes a vent part 13 in which a notch is formed, and may further include a groove 400 formed in a central portion of the vent part 13 by increasing a width of a first area 201.

In case that temperature of the secondary battery increases and gas is generated inside due to an occurrence of a thermal event, the vent part 13 may act as a path for discharging the gas and heat.

A first notch 100 may be formed on a central portion of the vent part 13 to have a depth deeper than those of the second notch 200 and the third notch 300 and may be located in an area where stress from internal pressure is concentrated, thereby being ruptured first. The first notch 100 may be positioned to pass through a groove 400 formed in the central portion of the vent part 13, and an area where the first notch 100 and the groove 400 overlap each other may be an area where the greatest strain from the expansion of the secondary battery is shown.

The first notch 100 may be ruptured starting from the central portion where the groove 400 is formed, and then the first area 201 may be ruptured along the first notch 100, the first notch being ruptured. The vent part 13, which has ruptured, may be open due to internal gas, and the gas and heat may be discharged through the open space, thereby reducing the risk of burst and thermal runaway of the secondary battery.

Afterwards, the vent part 13 may be opened along a second area 202. The second area 202 may extend to a plurality of the second area 202 from each of one end and another end of the first area 201, and may increase the rupture area and open space of the vent part 13.

The first area 201 and the second area 202 may be sequentially opened to discharge the gas and heat, thereby delaying and suppressing a series of explosions in the secondary battery. The third notch 300 may be formed along a boundary of the vent part 13 and may maintain the vent part 13 so that the vent part 13 may operate stably without being separated.

The secondary battery according to this embodiment may control rupture conditions, such as rupture order and pressure, to suppress further rapid deterioration and improve the safety of the secondary battery against heat transfer and fire.

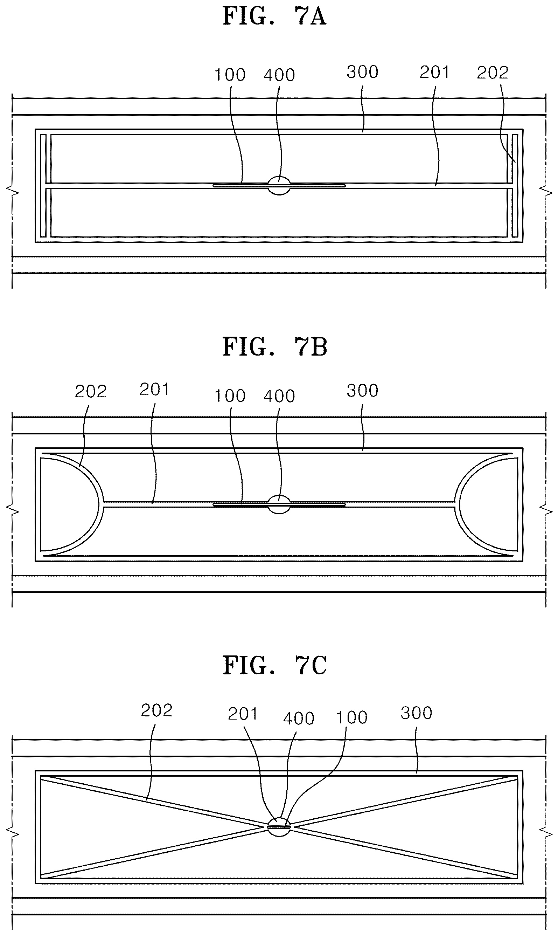

FIGS. 7A to 7C are views of modified examples of notches formed on a vent part of a secondary battery according to an embodiment of the invention.

Referring to FIGS. 7A to 7C, a secondary battery according to an embodiment of the invention includes a vent part in which a notch is formed, and may further include a groove 400 formed in a central portion of the vent part by increasing a width of a first area 201. The secondary battery according to this embodiment may include a first area 201 extending in a first direction from the central portion of the vent part and a second area 202 extending in a direction different from the first direction from the first area 201. The second area 202 may extend to a plurality of the second area 202 from each of one end and another end of the first area 201.

For example, the second area 202 may extend in a second direction perpendicular to the first direction (FIG. 7A). The third notch 300 may surround the second area 202 by connecting ends of the second area 202, and for example, the second area 202 may be located inside the third notch 300.

As another example, the second area 202 may extend in a curved shape from the first area 201 (FIG. 7B). For example, a direction in which the second area 202 extends may be a plurality of directions different from the first direction, and the second area 202 extended may increase the rupture area and open space of the vent part.

As another example, the first notch 100 and the first area 201 may be located inside the groove 400 formed in the central portion of the vent part. Through this, the stress from the expansion of the secondary battery may be concentrated in the groove 400, and the rupture and opening conditions of the vent part may be controlled.

The notch formed in the vent part may have various shapes in addition to those shapes. The shape of the notch, including the width, depth, length, position, direction, and the like of the notch, may be other than that illustrated in FIGS. 1 to 7C, and the notch may have various shapes as long as the vent part is easily ruptured by the notch.

The vent part may be located in a case or in a cap plate covering the upper portion of the case. For example, the vent part may be located between terminals of a terminal part on the cap plate. As another example, the vent part may be located on a lower surface, each of opposite side surfaces, or one side surface of the case. The shape of the vent part, including the size and position of the vent part, may be other than that illustrated in FIGS. 1 to 7C, and the vent part may have various shapes as long as gas and heat generated from inside of the secondary battery are discharged by the vent part and the burst and fire of the secondary battery are delayed or suppressed.

One or more embodiments may reduce the risk of diffusion of a thermal runaway phenomenon, which is a series of explosions, by providing a vent part that may facilitate the discharge of gas and heat inside a secondary battery. By forming a notch with different depths in the vent part, the vent part may be sequentially ruptured and open, and rupture pressure conditions may be controlled. One or more embodiments may provide a secondary battery with simplified manufacturing process and reduced manufacturing costs through an integrated vent part having a notch formed therein.

According to one or more embodiments, in case that internal pressure of a secondary battery increases, internal gas and heat may be easily discharged through a vent part having a notch formed therein, thereby ensuring safety and reliability of the secondary battery. A sequential rupture may be allowed and rupture conditions may be controlled according to different depths of a notch, and process simplification and reduction of manufacturing costs may be secured.

However, the effects obtainable through the invention may include other effects than the effects described above, and other technical effects not mentioned will be clearly understood by those of ordinary skill in the art from the description of the invention described below.

While the invention has been herein described with regard to the limited embodiments and drawings, the invention is not limited thereto and it is obvious to those skilled in the art that various modifications and changes may be made within the technical idea of the invention and the equivalent scope of the appended claims.

## Claims

1. A secondary battery (10), comprising:
an electrode assembly (210);
a case (15) accommodating the electrode assembly (210); and
a cap plate (17) covering an open portion of the case (15), wherein:
one of the case (15) and the cap plate (17) comprises a vent part (13) on an outer surface thereof, the vent part (13) comprising a notch,
the notch comprises a first notch (100) and a second notch (200),
the first notch (100) extends from a central portion of the vent part (13) in a first direction,
the second notch (200) comprises a first area (201) extending from the central portion in the first direction, and a second area (202) extending from the first area (201) in a direction different from the first direction, and
the first notch (100) is inside the first area (201).

2. The secondary battery (10) according to claim 1, wherein the second notch (200) is less deep than the first notch (100).

3. The secondary battery (10) according to claim 1 or 2, wherein a difference in depth between the first notch (100) and the second notch (200) is 20% or less of a thickness of the case (15).

4. The secondary battery (10) according to any of claims 1 to 3, wherein a length of the first notch (100) is 1/3 or less of a length of the first area (201).

5. The secondary battery (10) according to any of claims 1 to 4, wherein a depth of the first notch (100) is 70% to 85% of a thickness of the case (15).

6. The secondary battery (10) according to any to claims 1 to 5, wherein a depth of the second notch (200) is 50% to 70% of a thickness of the case (15).

7. The secondary battery (10) according to any to claims 1 to 6, wherein:
the notch further comprises a groove (400) in the central portion, and
a width of the groove (400) extends in the first area (201).

8. The secondary battery (10) according to any to claims 1 to 7, wherein:
the notch further comprises a third notch (300) surrounding the second notch (200),
ends of the second area (202) are connected, and
the third notch (300) is less deep than the second notch (200).

9. The secondary battery (10) according to claim 8, wherein the depth of the third notch (300) is 20% to 50% of a thickness of the case (15).

10. The secondary battery (10) according to claim 8 or 9, wherein:
a width of the third notch (300) is greater than a width of the first notch (100), and
a width of the second notch (200) is greater than the width of the third notch (300).

11. A secondary battery (10), comprising:
an electrode assembly (210);
a case (15) accommodating the electrode assembly (210); and
a cap plate (17) covering an open portion of the case (15), wherein:
one of the case (15) and the cap plate (17) comprises a vent part (13) on an outer surface thereof, the vent part (13) comprising a notch,
the notch comprises a first notch (100), a second notch (200), and a third notch (300),
the first notch (100) extends from a central portion of the vent part (13) in a first direction,
the second notch (200) comprises a first area (201) extending from the central portion in the first direction, and a second area (202) extending from the first area (201) in a direction different from the first direction,
the third notch (300) surrounds the second notch (200), and
ends of the second area (202) are connected.

12. The secondary battery (10) according to claim 11, wherein the first notch (100) is inside the first area (201).

13. The secondary battery (10) according to claim 11 or 12, wherein a difference in depth between the first notch (100) and the second notch (200) is 20% or less of a thickness of the case (15).

14. The secondary battery (10) according to any of claims 11 to 13, wherein a length of the first notch (100) is 1/3 or less of a length of the first area (201).

15. The secondary battery (10) according to any of claims 11 to 14, wherein:
the second notch (200) is less deep than the first notch (100), and
the third notch (300) is less deep than the second notch (200).
